# EUROPÄISCHE PATENTSCHRIFT

(11) **EP 2 862 329 B1**
(45) Veröffentlichungstag und Bekanntmachung des Hinweises auf die Patenterteilung: **10.07.2019**
(21) Anmeldenummer: 13723675.8
(22) Anmeldetag: 16.05.2013
(51) Int. Cl.: H04L 29/06

(54) **AUSWAHL EINES KOMMUNIKATIONSPROTOKOLLS**
SELECTION OF A COMMUNICATIONS PROTOCOL
SÉLECTION D'UN PROTOCOLE DE COMMUNICATION

(30) Priorität: 19.06.2012 DE 102012012163
(43) Veröffentlichungstag der Anmeldung: 22.04.2015
(73) Patentinhaber: Giesecke+Devrient Mobile Security GmbH, 81677 München (DE)
(72) Erfinder: MATHÉ, Werner, 82216 Maisach (DE)
(86) Internationale Anmeldenummer: PCT/EP2013/001472
(87) Internationale Veröffentlichungsnummer: WO 2013/189562

(56) Entgegenhaltungen:
- EP-A1- 2 365 672
- WO-A1-2012/152431
- DE-T2- 60 107 106

## Beschreibung

Die Erfindung betrifft ein Verfahren, ein Terminal, einen tragbaren Datenträger und ein System bestehend aus einem Terminal und einem tragbaren Datenträger zur Auswahl mindestens eines bestimmten Kommunikationsprotokolls zur Kommunikation zwischen einem Terminal und einem damit verbundenen tragbaren Datenträger.

EP 2 365 672 A1 offenbart ein Verfahren um ein Kommunikationsprotokoll auszuwählen. Ein erstes kontaktloses Gerät ist in der Lage mittels eines ersten und eines zweiten kontaktlosen Kommunikationsprotokolls zu kommunizieren, indem ein moduliertes magnetisches Feld erzeugt wird, welches eine erste oder eine zweite magnetische Feldstärke aufweist. Die Erzeugung des modulierten magnetischen Felds wird unmittelbar zu Beginn einer Polling-Sequenz gestartet. Die erste magnetische Feldstärke ist kleiner als 1,5 A/m. Das Verfahren beginnt mit der Polling-Sequenz, indem ein erstes Protokoll verwendet wird. Das erste Protokoll umfasst wenigstens einen Aktivierungsbefehl. Anschließend wird geprüft, ob eine Antwort von einem zweiten kontaktlosen Gerät während einer eingestellten Zeit auf einen Aktivierungsbefehl empfangen wurde. Im Falle einer erfolglosen Polling-Sequenz wird auf das zweite Protokoll umgeschaltet.

In der ISO 7816-3 wird beschrieben, wie eine kontaktgebundene Kommunikation zwischen einem Terminal und einer Chipkarte abläuft. Eine entsprechende Beschreibung des Ablaufs einer kontaktlosen Kommunikation zwischen einem Terminal und einer Chipkarte im Telekommunikationsbereich ist in der ETSI TS 102 613 beschrieben.

Ferner ist im Stand der Technik bekannt, dass von den insgesamt acht Kontakten eines ISO-Kontaktflächenfeldes gemäß ISO 7816-2, das sich auf einem tragbaren Datenträger, z.B. eine Chipkarte, befindet um eine kontaktgebundene Kommunikation mit einem Terminal herzustellen, in der Regel nur sechs Kontakte, d.h. C1 bis C3 und C5 bis C7 verwendet werden. Die Kontakte C4 und C8 sind für zukünftige Anwendungen reserviert. Diese werden für bestimmte Anwendungsbereiche wegfallen. Nachdem für die Spannungsversorgung des tragbaren Datenträgers die Kontakte C1 und C5 verwendet werden, bleiben nur noch vier Kontakte zum Informations- und Datenaustausch des Datenträgers übrig.

Soll ein anderes Kommunikationsprotokoll als das übliche ISO 7816-3 Protokoll für die Kommunikation zwischen Terminal und Datenträger verwendet werden, dann muss die Belegung der vorhandenen vier Kontakte für das andere Kommunikationsprotokoll organisiert werden. Dies gilt insbesondere für Kommunikationsprotokolle, die eine höhere Datenübertragungsrate als ISO 7816-3 haben. Zu tragen kommt diese Problematik insbesondere dann, wenn ein Terminal und ein tragbarer Datenträger miteinander kommunizieren sollen, die unterschiedliche Kommunikationsprotokolle unterstützen.

Ferner ist es problematisch, dass es lange dauert, bis große Datenmengen mit den für Chipkarten üblichen Kommunikationsprotokollen übertragen werden.

Aufgabe der Erfindung ist es folglich ein Verfahren zur Verfügung zu stellen, das es ermöglicht ein Kommunikationsprotokoll zur Kommunikation zwischen Terminal und Datenträger auszuwählen, das in der Lage ist große Datenmengen schnell zu übertragen.

Die Aufgabe der Erfindung wird durch den unabhängigen Anspruch 1 und die nebengeordneten Ansprüche 13 bis 15 gelöst. Vorteilhafte Ausführungen sind in den abhängigen Ansprüchen 2 bis 12 beschrieben.

Die Erfindung offenbart zur Lösung der Aufgabe ein Verfahren zur Auswahl mindestens eines Kommunikationsprotokolls zur Kommunikation zwischen mindestens zwei Kommunikationsteilnehmern, wobei ein erster Kommunikationsteilnehmer, z.B. ein Terminal, unter Verwendung eines ersten Kommunikationsprotokolls, z.B. Serial Peripheral Interface SPI, eine erste Anfrage an einen zweiten Kommunikationsteilnehmer, z.B. eine Chipkarte, sendet um sich mit diesem auf das erste Kommunikationsprotokoll für eine anschließende Kommunikation zu einigen, wobei der zweite Kommunikationsteilnehmer auf die erste Anfrage als Zeichen der Einigung auf das erste Kommunikationsprotokoll eine Antwort sendet, wenn er das erste Kommunikationsprotokoll verwendet, anschließend wird das erste Kommunikationsprotokoll für eine folgende Kommunikation zwischen den Kommunikationsteilnehmern verwendet, wobei andernfalls eine anschließende Kommunikation entsprechend einem zweiten Kommunikationsprotokoll vereinbart ist, dadurch gekennzeichnet, dass die erste Anfrage unter Verwendung des ersten Kommunikationsprotokolls während eines Zeitraums stattfindet, in welchem sich das zweite Kommunikationsprotokoll in einem undefinierten Zustand befindet. Mit einem Undefinierten Zustand ist gemeint, dass die Signale in diesem Zustand keinen definierten Zustand haben. Dies ist z.B. bei ISO 7816-3 während der ersten 200 Takte nach dem Aktivieren der Verbindung der Fall.

Ein vorteilhafte Ausführungsform der Erfindung ist, dass wenn innerhalb des Zeitraums des undefinierten Zustands des zweiten Kommunikationsprotokolls der zweite Kommunikationsteilnehmer nicht auf die erste Anfrage des ersten Kommunikationsteilnehmers antwortet und sich die Kommunikationsteilnehmer folglich nicht auf das erste Kommunikationsprotokoll einigen können, der erste Kommunikationsteilnehmer eine dritte Anfrage gemäß einem dritten Kommunikationsprotokoll an den zweiten Kommunikationsteilnehmer sendet, um sich mit diesem auf das dritte Kommunikationsprotokoll für eine anschließende Kommunikation zu einigen, solange der Zeitraum des undefinierten Zustands des zweiten Kommunikationsprotokolls nicht beendet ist. Das zweite Kommunikationsprotokoll ist in der Regel langsamer als das erste und das dritte Kommunikationsprotokoll.

Ein weitere vorteilhafte Ausführungsform der Erfindung ist, dass der erste Kommunikationsteilnehmer solange weitere Anfragen gemäß einem vorher versuchten oder anderen Kommunikationsprotokollen an den zweiten Kommunikationsteilnehmer sendet, bis der zweite Kommunikationsteilnehmer auf eine weitere Anfrage antwortet und damit ein gemeinsames Kommunikationsprotokoll gefunden wurde oder der Zeitraum des undefinierten Zustands des zweiten Kommunikationsprotokolls abgelaufen ist.

Eine weitere vorteilhafte Ausführungsform der Erfindung ist, dass das Senden einer Anfrage des ersten an den zweiten Kommunikationsteilnehmer und das Senden einer Antwort vom zweiten an den ersten Kommunikationsteilnehmer im Halb- und/oder Vollduplexbetrieb durchgeführt wird.

Eine weitere vorteilhafte Ausführungsform der Erfindung ist, dass eine Kommunikation gemäß einem Kommunikationsprotokoll, auf das sich die Kommunikationsteilnehmer geeinigt haben, im Halb- und/oder Vollduplexbetrieb durchgeführt wird.

Eine weitere vorteilhafte Ausführungsform der Erfindung ist, dass das Senden einer Anfrage des ersten an den zweiten Kommunikationsteilnehmer und das Senden einer Antwort vom zweiten an den ersten Kommunikationsteilnehmer im Halbduplexbetrieb und die Kommunikation gemäß einem Kommunikationsprotokoll, auf das sich die Kommunikationsteilnehmer geeinigt haben, im Vollduplexbetrieb durchgeführt wird.

Eine weitere vorteilhafte Ausführungsform der Erfindung ist, dass die Kommunikation zwischen den Kommunikationsteilnehmern kontaktlos und/oder leitungsgebunden durchgeführt wird.

Eine weitere vorteilhafte Ausführungsform der Erfindung ist, dass eine Reihenfolge der Kommunikationsprotokolle vorgegeben wird, wobei der erste Kommunikationsteilnehmer gemäß der Reihenfolge entsprechende Anfragen an den zweiten Kommunikationsteilnehmer sendet.

Eine weitere vorteilhafte Ausführungsform der Erfindung ist, dass als erstes Kommunikationsprotokoll ein Protokoll gemäß Serial Peripheral Interface (SPI) Spezifikation und als zweites Kommunikationsprotokoll ein Protokoll gemäß ISO 7816-3 Spezifikation verwendet wird.

Eine weitere vorteilhafte Ausführungsform der Erfindung ist, dass als erster Kommunikationsteilnehmer ein Terminal und als zweiter Kommunikationsteilnehmer ein tragbarer Datenträger, wie z.B. eine Chipkarte, SIM-Karte etc. verwendet werden.

Eine weitere vorteilhafte Ausführungsform der Erfindung ist, dass Kontakt C2 eines ISO-Kontaktflächenfeldes gemäß ISO 7816-2 des Datenträgers mit einem Slave-Select-Signal (SSS) bei Verwendung der SPI-Spezifikation und mit einem Rücksetzsignal (RST) bei Verwendung der ISO 7816 Spezifikation belegt ist.

Eine weitere vorteilhafte Ausführungsform der Erfindung ist, dass Kontakt C3 eines ISO-Kontaktflächenfeldes gemäß ISO 7816-2 des Datenträgers mit einem Serial-Clock-Signal (SCK) bei Verwendung der SPI-Spezifikation und mit einem Taktsignal (CLK) bei Verwendung der ISO 7816 Spezifikation belegt ist.

Eine weitere vorteilhafte Ausführungsform der Erfindung ist, dass Kontakt C6 eines ISO-Kontaktflächenfeldes gemäß ISO 7816-2 des Datenträgers mit einem Master-Out-Slave-In-Signal (MOSI) bei Verwendung der SPI-Spezifikation und mit einem Standard or Proprietary Use (SPU) Signal bei Verwendung der ISO 7816 Spezifikation belegt ist.

Eine weitere vorteilhafte Ausführungsform der Erfindung ist, dass Kontakt C7 eines ISO-Kontaktflächenfeldes gemäß ISO 7816-2 des Datenträgers mit einem Master-In-Slave-Out-Signal (MISO) bei Verwendung der SPI-Spezifikation und mit einem Input Output (IO) Signal bei Verwendung der ISO 7816 Spezifikation belegt ist. Ferner ist es möglich, dass C7 sowohl mit MOSI als auch mit MISO belegt wird.

Eine weitere vorteilhafte Ausführungsform der Erfindung ist, dass die Belegung der Kontakte C6 und C7 vertauscht ist.

Eine weitere vorteilhafte Ausführungsform der Erfindung ist, dass die Anfrage und die Antwort als Codewort mindestens zwei Wechsel vom digitalen Low-Pegel zum digitalen High-Pegel und/oder vom digitalen High-Pegel zum digitalen Low-Pegel aufweist. Dies dient dazu, dass die Signale der Anfrage und der Antwort sicher erkannt werden und nicht versehentlich falsch interpretiert werden und sich somit deutlich von zufälligen Signalschwankungen unterscheiden. Die Anzahl der Pegelwechsel ist besonders vorteilhaft mehr als zwei, also z.B. drei oder vier. Zwei Pegelwechsel können von einer einzigen Störung leicht erzeugt werden, gerade bei synchronen Protokollen mit nur einer definierten Abtastzeit. Das wesentliche Merkmal von Codewörtern ist, dass Codewörter ohne Daten zu übertragen als Teil eines Kommunikationsprotokolls übertragen werden können. Bei der Anzahl der Pegelwechsel ist nur das Codewort entscheidend.

Eine weitere vorteilhafte Ausführungsform der Erfindung ist, dass die Anfrage als Codewort aus einer logischen Kombination des SCK-Signals und des SSS-Signals bei Verwendung der SPI Spezifikation besteht. Als logische Kombination kann jede geeignete logische Verknüpfung verwendet werden, z.B. eine UND- oder eine ODER-Verknüpfung.

Eine weitere vorteilhafte Ausführungsform der Erfindung ist, dass mindestens die Anfrage und/oder mindestens die Antwort als Inhalt keine Daten aufweisen. Dies hat den Vorteil, dass z.B. eindeutige digitale High- oder Low-Pegel zur Signalisierung der Anfrage und/oder der Antwort verwendet werden können.

Eine weitere vorteilhafte Ausführungsform der Erfindung ist, dass zur Auswahl eines Kommunikationsprotokolls eine eigene leitungsgebundene und/oder eine eigene kontaktlose Verbindung verwendet wird. Dies hat den Vorteil, dass z.B. eine Kombination mit anderen Signalen bzw. Signalbelegungen auf den Kontakten C1 bis C 8 des ISO-Kontaktflächenmoduls nicht beachtet werden muss.

Eine weitere vorteilhafte Ausführungsform der Erfindung ist, dass zur Auswahl eines Kommunikationsprotokolls eine leitungsgebundene und/oder eine kontaktlose Verbindung verwendet wird, welche Bestandteil von mindestens zwei Kommunikationsprotokollen ist. Dies hat den Vorteil, dass die Anzahl der Verbindungen klein gehalten werden kann. Beispielsweise könnte dies bei ISO 7816-3 die Leitung für das Rücksetz-/Reset-/RST-Signal auf Kontakt C2 des ISO-Kontaktflächenmoduls sein, welche bei SPI das Slave Select-/SSS Signal führt. Als Signalpegel könnte für ISO 7816 der logische Pegel High und für SPI der logische Pegel Low gewählt werden. Damit sind High-Pegel unter 400 Takten nach Aktivierung des Datenträgers auf der Signalleitung erlaubt, ohne ISO 7816 zu aktivieren, da erst dann ein Answer To Reset ATR - Signal gesendet wird. Ferner besteht die vorteilhafte Möglichkeit, dass ein dauerhafter High- und/oder Low-Pegel ein Codewort ohne Nutzdaten, insbesondere bei SPI, darstellt. Damit sind Low- und/oder High-Pegel auf der Leitung für RST/SSS möglich, ohne eine Datenempfang nach SPI zu erzeugen, wenn man z.B. nur einen Warmstart nach ISO 7816 durchführen will.

Eine weitere vorteilhafte Ausführungsform der Erfindung ist, dass zur Auswahl eines Kommunikationsprotokolls auf einer leitungsgebundenen und/oder einer kontaktlosen Verbindung ein einziger logischer Pegel High oder Low verwendet wird.

Eine weitere vorteilhafte Ausführungsform der Erfindung ist, dass ein Terminal eingerichtet ist, das oben beschriebene Verfahren auszuführen.

Eine weitere vorteilhafte Ausführungsform der Erfindung ist, dass ein tragbarer Datenträger, z.B. eine Chipkarte, eingerichtet ist, das oben beschriebene Verfahren auszuführen.

Eine weitere vorteilhafte Ausführungsform der Erfindung ist ein System, das aus mindestens einem Terminal und mindestens einem tragbaren Datenträger besteht, wobei das System eingerichtet ist, um das oben beschriebene Verfahren auszuführen.

Ausführungsbeispiele der Erfindung werden nachfolgend anhand der beigefügten Figuren detailliert beschrieben.

Es zeigen:
- Fig. 1: eine Kommunikation zwischen einem Terminal und einem Datenträger gemäß dem Protokoll nach ISO 7816-3 bei der Aktivierung und bei einem sogenannten Cold Reset; und
- Fig. 2: eine Kommunikation zwischen einem SPI-fähigen Datenträger und einem SPI-nicht-fähigen Terminal; und
- Fig. 3: eine Kommunikation zwischen einem SPI-fähigen Terminal und einem SPI-nicht-fähigen Datenträger; und
- Fig. 4: eine Kommunikation zwischen einem SPI-fähigen Datenträger und einem SPI-fähigen Terminal.

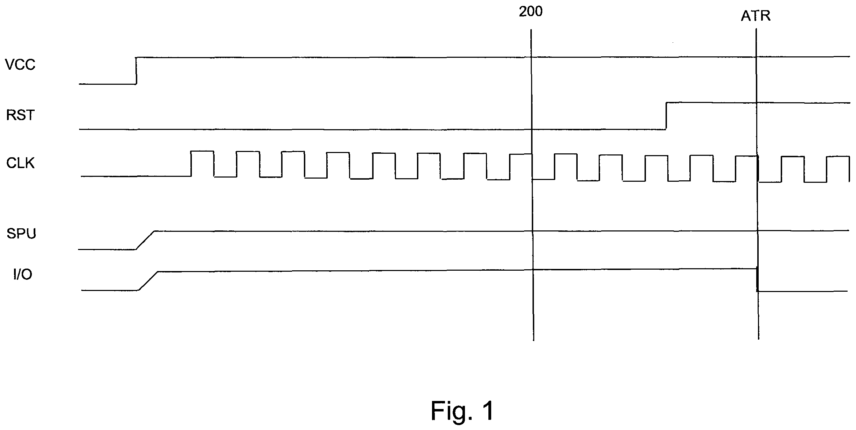

Fig. 1 zeigt den Ablauf einer Kommunikation zwischen einem Terminal und einem Datenträger gemäß dem Protokoll nach ISO 7816-3 bei der Aktivierung und bei einem sogenannten Cold Reset. Figur 1 zeigt kein erfindungsgemäßes Ausführungsbeispiel.

Von dem Terminal werden eine Versorgungsspannung VCC und ein Taktsignal CLK bereit gestellt. Ein Rücksetzsignal RST befindet sich im Zustand low. Ein Eingabe-/Ausgabe-Anschluss I/O wird in einen Eingabezustand mittels dem Zustand high gebracht. Damit ist der Datenträger aktiviert und bereit für einen Cold Reset. Der interne Zustand bzw. die Signale des Datenträgers ist bzw. sind vor dem Cold Reset nicht definiert.

Innerhalb von 200 Takten nach Bereitstellung des Taktes CLK soll der Datenträger den Eingabe-/ Ausgabe-Anschluss I/O auf einen high Zustand bringen. Der Cold Reset folgt daraus, dass das RST-Signal im Zustand low für wenigstens 400 Takte gehalten wird, nachdem das Taktsignal zur Verfügung gestellt wird. Ab dem Zeitpunkt, wann das RST-Signal vom Low- in den High-Zustand wechselt, soll zwischen 400 und 40 000 Takten nach der steigenden Flanke des RST-Signals ein I/O-Signal bereit gestellt werden. Sollte das I/O-Signal nicht innerhalb von 40 000 Takten bereit gestellt werden, dann wird eine Deaktivierung des Datenträgers durchgeführt.

Nach Durchführung des Cold Resets, damit der interne Zustand des Datenträgers definierte Werte aufweist, wird vom Datenträger ein Answer to Reset ATR an das Terminal gesendet. Der ATR ist ein Datenstring, welcher verschiedene Informationen über die Datenübertragung und den Datenträger aufweist. Der ATR wird immer mit einem Teiler von 372 ausgesendet, so dass der ATR jedes Datenträgers unabhängig von den Parametern des Übertragungsprotokolls empfangen und gelesen werden kann.

Während des Cold Resets ist das Signal Standard Or Proprietary Use (SPU) ohne Bedeutung, so dass es im Zustand high bleibt.

Der wesentliche Unterschied der vorliegenden Erfindung zum Stand der Technik ist, dass während des Undefinierten Zustands der Signale des ersten Protokolls, z.B. ISO 7816, versucht wird ein schnelleres Kommunikationsprotokoll, z.B. SPI, zwischen Terminal und Datenträger zu finden, auf das sich Terminal und Datenträger einigen und das für eine folgende Kommunikation verwendet wird.

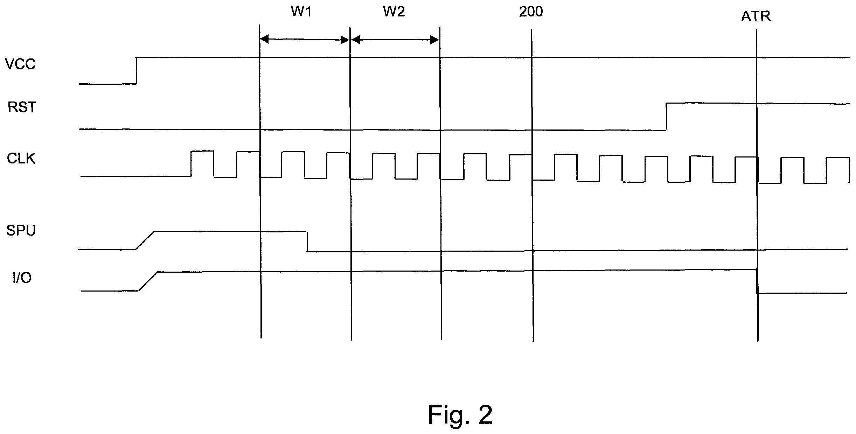

Figur 2 zeigt eine Kommunikation zwischen einem SPI-fähigen Datenträger und einem SPI-nicht-fähigen Terminal unmittelbar nach Inbetriebnahme des Datenträgers. Figur 2 zeigt kein erfindungsgemäßes Ausführungsbeispiel. Der Datenträger erwartet vom Terminal die Sendung eines Codewortes mit einer Länge w1 über das Signal SPU bzw. den Kontakt C6. Das Terminal ist aber nicht für SPI geeignet, somit sendet es kein Codewort mit der Länge w1 an Kontakt C6 des Datenträgers. Der Datenträger entscheidet hier, dass das Terminal nicht für SPI geeignet ist, da vom Terminal nach der erwarteten Codewortlänge w1 kein Codewort an den Datenträger gesendet worden ist. Folglich führt der Datenträger eine Bearbeitung des Protokolls gemäß ETSI TS 102 613 bei einer kontaktlosen Anwendung oder gemäß ISO 7816-3 bei einer kontaktgebundenen Anwendung fort.

Der Datenträger verhält sich auf der I/O-Leitung, Kontakt C7, wie in ISO 7816-3 definiert.

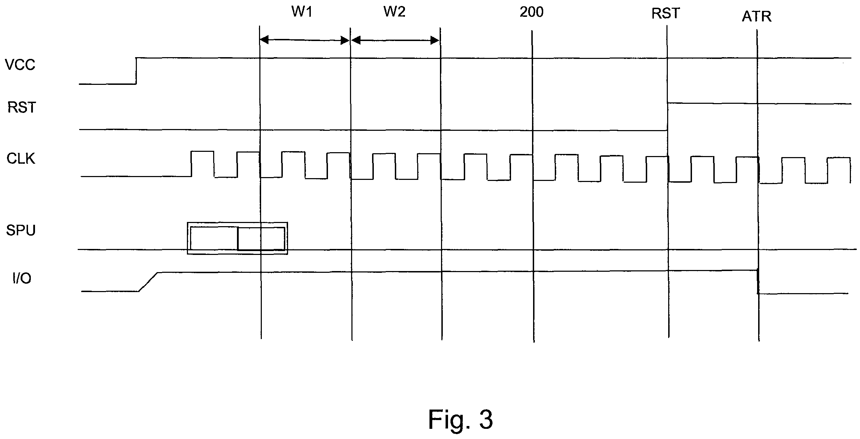

Figur 3 zeigt eine Kommunikation zwischen einem SPI-fähigen Terminal und einem SPI-nicht-fähigen Datenträger. Hier sendet das Terminal ein Codewort über den Kontakt C6, SPU an den Datenträger, um zu fragen, ob der Datenträger das SPI-Protokoll unterstützt. Nachdem das Terminal vom Datenträger bis zum Ende der Länge des zweiten Codewortes w2 keine Antwort erhält, entscheidet das Terminal die Kommunikation mit dem Datenträger nach ISO 7816-3 weiter zu führen.

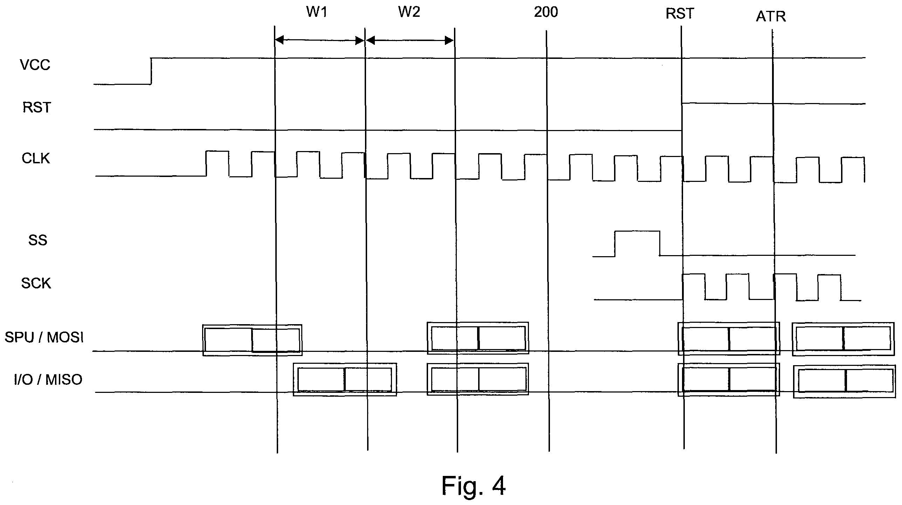

Figur 4 zeigt eine Kommunikation zwischen einem SPI-fähigen Datenträger und einem SPI -fähigen Terminal. Hier sendet das Terminal über Kontakt C6, SPU eine Anfrage an den Datenträger, ob dieser SPI unterstützt. Der Datenträger antwortet über Kontakt C7, I/O und sendet dem Terminal eine Antwort, daß SPI unterstützt wird. Da die Anfrage des Terminals bestätigt wird, kommunizieren Terminal und Datenträger fortan mittels dem SPI-Protokoll. Damit ändert sich die Interpretation von RST/ Kontakt C2 und CLK/Kontakt C3. Aus dem Rücksetzsignal RST wird ein sogenanntes Slave Select Signal SSS an Kontakt C2. Aus dem Taktsignal CLK an Kontakt C3 wird ein Serial Clock Signal SCK an Kontakt C3.

Das Signal SCK setzt aus, sobald keine Daten gesendet werden. Das Signal SSS sollte zwischen aktiven Kommunikationsvorgängen zumindest zeitweise ausgesetzt werden, um Taktfehler zu korrigieren.

Wesentlich für die Erfindung ist, dass die Einigung auf SPI während dem Undefinierten Zustand des ISO-Protokolls, d.h. während der ersten 200 Takte nach Aktivierung durchgeführt wurde.

Das Terminal ist gemäß der Erfindung in der Lage unabhängig vom Datenträger Kommunikationsprotokolle gemäß SPI und/oder ISO 7816-3 und/oder ETSI TS 102 613 zu unterstützen. Insofern ist über den Kontakt C7 bzw. I/O des Datenträgers ein Halbduplexbetrieb möglich.

Der große Vorteil von SPI gegenüber ISO 7816 ist, dass SPI deutlich schneller ist.

Ein weiterer Vorteil ist, dass bei SPI ein Vollduplexbetrieb möglich ist, während bei ISO 7816 nur ein Halbduplexbetrieb möglich ist.

## Patentansprüche

1. Verfahren zur Auswahl mindestens eines Kommunikationsprotokolls zur Kommunikation zwischen mindestens zwei Kommunikationsteilnehmern,
wobei ein erster Kommunikationsteilnehmer unter Verwendung eines ersten Kommunikationsprotokolls eine erste Anfrage an einen zweiten Kommunikationsteilnehmer sendet, um sich mit diesem auf das erste Kommunikationsprotokoll für eine anschließende Kommunikation zu einigen,
wobei der zweite Kommunikationsteilnehmer auf die erste Anfrage als Zeichen der Einigung auf das erste Kommunikationsprotokoll eine Antwort sendet, wenn er das erste Kommunikationsprotokoll verwendet, anschließend wird das erste Kommunikationsprotokoll für eine folgende Kommunikation zwischen den Kommunikationsteilnehmern verwendet,
wobei der erste Kommunikationsteilnehmer ein zweites Kommunikationsprotokoll verwendet, wenn der erste Kommunikationsteilnehmer auf seine Anfrage mit dem ersten Kommunikationsprotokoll keine Antwort vom zweiten Kommunikationsteilnehmer erhält **dadurch gekennzeichnet, dass**
die erste Anfrage nach Inbetriebnahme des zweiten Kommunikationsteilnehmers stattfindet, wobei als zweites Kommunikationsprotokoll ein Protokoll gemäß ISO 7816-3 Spezifikation verwendet wird, wobei die erste Anfrage innerhalb der ersten 200 Takte nach Aktivierung des zweiten Kommunikationsprotokolls stattfindet.

2. Verfahren nach Anspruch 1, **dadurch gekennzeichnet, dass** wenn innerhalb der ersten 200 Takte der zweite Kommunikationsteilnehmer nicht auf die erste Anfrage des ersten Kommunikationsteilnehmers antwortet und sich die Kommunikationsteilnehmer folglich nicht auf das erste Kommunikationsprotokoll einigen können, der erste Kommunikationsteilnehmer eine zweite Anfrage gemäß einem dritten Kommunikationsprotokoll an den zweiten Kommunikationsteilnehmer sendet, um sich mit diesem auf das dritte Kommunikationsprotokoll für eine anschließende Kommunikation zu einigen, solange der Zeitraum der ersten 200 Takte nicht beendet ist.

3. Verfahren nach Anspruch 1 oder 2, **dadurch gekennzeichnet, dass** der erste Kommunikationsteilnehmer solange weitere Anfragen gemäß weiteren Kommunikationsprotokollen an den zweiten Kommunikationsteilnehmer sendet, bis der zweite Kommunikationsteilnehmer auf eine weitere Anfrage antwortet und damit ein gemeinsames Kommunikationsprotokoll gefunden wurde oder der Zeitraum der ersten 200 Takte abgelaufen ist.

4. Verfahren nach Anspruch 3, **dadurch gekennzeichnet, dass** das Senden einer Anfrage des ersten an den zweiten Kommunikationsteilnehmer und das Senden einer Antwort vom zweiten an den ersten Kommunikationsteilnehmer im Halb- und/oder Vollduplexbetrieb durchgeführt wird.

5. Verfahren nach Anspruch 3, **dadurch gekennzeichnet, dass** eine Kommunikation gemäß einem Kommunikationsprotokoll, auf das sich die Kommunikationsteilnehmer geeinigt haben, im Halb- und/oder Vollduplexbetrieb durchgeführt wird.

6. Verfahren nach den vorhergehenden Ansprüchen, **dadurch gekennzeichnet, dass** eine Reihenfolge der Kommunikationsprotokolle vorgegeben wird, wobei der erste Kommunikationsteilnehmer gemäß der Reihenfolge entsprechende Anfragen an den zweiten Kommunikationsteilnehmer sendet.

7. Verfahren nach den vorhergehenden Ansprüchen, **dadurch gekennzeichnet, dass** als erstes Kommunikationsprotokoll ein Protokoll gemäß Serial Peripheral Interface (SPI) Spezifikation verwendet wird.

8. Verfahren nach den vorhergehenden Ansprüchen, **dadurch gekennzeichnet, dass** die Anfrage und die Antwort als Codewort mindestens zwei Wechsel vom digitalen Low-Pegel zum digitalen High-Pegel und/oder vom digitalen High-Pegel zum digitalen Low-Pegel aufweist.

9. Verfahren nach den vorhergehenden Ansprüchen, **dadurch gekennzeichnet, dass** mindestens die Anfrage und/ oder mindestens die Antwort als Inhalt keine Daten aufweisen.

10. Verfahren nach den vorhergehenden Ansprüchen, **dadurch gekennzeichnet, dass** zur Auswahl eines Kommunikationsprotokolls eine eigene leitungsgebundene Verbindung verwendet wird.

11. Verfahren nach den vorhergehenden Ansprüchen, **dadurch gekennzeichnet, dass** zur Auswahl eines Kommunikationsprotokolls eine leitungsgebundene Verbindung verwendet wird, welche Bestandteil von mindestens zwei Kommunikationsprotokollen ist.

12. Verfahren nach den vorhergehenden Ansprüchen, **dadurch gekennzeichnet, dass** zur Auswahl eines Kommunikationsprotokolls auf einer leitungsgebundenen Verbindung ein einziger logischer Pegel High oder Low verwendet wird.

13. Terminal, das eingerichtet ist, als erster Kommunikationsteilnehmer die dem ersten Kommunikationsteilnehmer entsprechenden Schritte des Verfahrens nach einem der Ansprüche 1 bis 12 durchzuführen.

14. Tragbarer Datenträger, der eingerichtet ist, als zweiter Kommunikationsteilnehmer die dem zweiten Kommunikationsteilnehmer entsprechenden Schritte des Verfahrens nach einem der Ansprüche 1 bis 12 durchzuführen.

15. System, bestehend aus mindestens einem Terminal und mindestens einem tragbaren Datenträger, das eingerichtet ist, das Verfahren gemäß den Ansprüchen 1 bis 12 auszuführen.

## Claims

1. A method of selecting at least one communication protocol for communication between at least two communication partners,
wherein a first communication partner sends a first request to a second communication partner employing a first communication protocol, in order to agree with said second communication partner the first communication protocol for a subsequent communication,
wherein the second communication partner sends a response to the first request as a sign of agreement to the first communication protocol if it employs the first communication protocol; subsequently the first communication protocol is employed for a subsequent communication between the communication partners,
wherein the first communication partner employs a second communication protocol if the first communication partner does not receive a response from the second communication partner to its request with the first communication protocol, **characterized in that**
the first request takes place after putting into operation the second communication partner, wherein as the second communication protocol a protocol according to the ISO 7816-3 specification is employed,
wherein the first request takes place within the first 200 cycles after activation of the second communication protocol.

2. The method according to claim 1, **characterized in that** if within the first 200 cycles, the second communication partner does not respond to the first request of the first communication partner and the communication partners consequently cannot agree on the first communication protocol, the first communication partner sends a second request according to a third communication protocol to the second communication partner, in order to agree with said second partner on the third communication protocol for a subsequent communication, as long as the period of the first 200 cycles has not been completed.

3. The method according to claim 1 or 2, **characterized in that** the first communication partner sends further requests according to further communication protocols to the second communication partner until the second communication partner responds to a further request and thus a common communication protocol has been found or the period of the first 200 cycles has expired.

4. The method according to claim 3, **characterized in that** the sending of a request of the first to the second communication partner and the sending of a response from the second to the first communication partner are carried out in half and / or full duplex operation mode.

5. The method according to claim 3, **characterized in that** a communication according to a communication protocol, on which the communication partners have agreed, is carried out in half and / or full duplex operation mode.

6. The method according to the preceding claims, **characterized in that** an order of the communication protocols is predetermined, wherein the first communication partner sends corresponding requests according to the order to the second communication partner.

7. The method according to the preceding claims, **characterized in that** a protocol according to the Serial Peripheral Interface (SPI) specification is employed as the first communication protocol.

8. The method according to the preceding claims, **characterized in that** the request and the response as a codeword has at least two changes from the digital low level to the digital high level and/or from the digital high level to the digital low level.

9. The method according to the preceding claims, **characterized in that** at least the request and/or at least the response have no data as content.

10. The method according to the preceding claims, **characterized in that** a separate wired connection is employed to select a communication protocol.

11. The method according to the preceding claims, **characterized in that** a wired connection that is part of at least two communication protocols is employed to select a communication protocol.

12. The method according to the preceding claims, **characterized in that** to select a communication protocol on a wired connection, a single logic level high or low is employed.

13. A terminal adapted to carry out the corresponding steps of the method according to any of claims 1 to 12 as the first communication partner.

14. A portable data carrier adapted to carry out the corresponding steps of the method according to any of claims 1 to 12 as the second communication partner.

15. A system composed of at least one terminal and at least one portable data carrier adapted to carry out the method according to claims 1 to 12.

## Revendications

1. Procédé de sélection d'au moins un protocole de communication pour la communication entre au moins deux participants à la communication,
cependant qu'un premier participant à la communication, en utilisant un premier protocole de communication, envoie une première demande à un deuxième participant à la communication afin de s'accorder avec ce dernier sur le premier protocole de communication pour une communication subséquente,
cependant que le deuxième participant à la communication, à la suite de la première demande, en signe de l'accord sur le premier protocole de communication, envoie une réponse quand il utilise la premier protocole de communication, puis le premier protocole de communication est utilisé pour une communication suivante entre les participants à la communication,
cependant que le premier participant à la communication utilise un deuxième protocole de communication si le premier participant à la communication ne reçoit pas de réponse à sa demande avec le premier protocole de communication de la part du deuxième participant à la communication,
**caractérisé en ce que**
la première demande a lieu après la mise en service du deuxième participant à la communication, cependant que, comme deuxième protocole de communication, un protocole conforme à la spécification ISO 7816-3 est utilisé,
cependant que la première demande a lieu dans le délai des 200 premiers cycles après activation du deuxième protocole de communication.

2. Procédé selon la revendication 1, **caractérisé en ce que** si, dans le délai des 200 premiers cycles, le deuxième participant à la communication ne répond pas à la première demande du premier participant à la communication et les participants à la communication ne peuvent donc pas s'accorder sur le premier protocole de communication, le premier participant à la communication envoie une deuxième demande conformément à un troisième protocole de communication au deuxième participant à la communication afin de s'accorder avec ce dernier sur le troisième protocole de communication pour une communication subséquente tant que le laps de temps des 200 premiers cycles n'est pas achevé.

3. Procédé selon la revendication 1 ou 2, **caractérisé en ce que** le premier participant à la communication continue à envoyer d'autres demandes selon d'autres protocoles de communication au deuxième participant à la communication jusqu'à ce que le deuxième participant à la communication réponde à une autre demande et qu'un protocole de communication commun ait ainsi été trouvé ou que le laps de temps des 200 premiers cycles soit écoulé.

4. Procédé selon la revendication 3, **caractérisé en ce que** l'envoi d'une demande du premier au deuxième participant à la communication et l'envoi d'une réponse du deuxième au premier participant à la communication est effectué en mode semi-duplex ou duplex intégral.

5. Procédé selon la revendication 3, **caractérisé en ce qu'**une communication est effectuée en mode semi-duplex ou duplex intégral conformément à un protocole de communication sur lequel se sont accordés les participants à la communication.

6. Procédé selon une des revendications précédentes, **caractérisé en ce qu'**un ordre des protocoles de communication est prédéterminé, cependant que le premier participant à la communication envoie des demandes correspondantes conformément à l'ordre au deuxième participant à la communication.

7. Procédé selon une des revendications précédentes, **caractérisé en ce que**, en tant que premier protocole de communication, un protocole conforme à la spécification Serial Peripheral Interface (SPI) est utilisé.

8. Procédé selon une des revendications précédentes, **caractérisé en ce que** la demande et la réponse comporte comme mot de code au moins deux passages du niveau numérique BAS au niveau numérique HAUT, et/ou du niveau numérique HAUT au niveau numérique BAS.

9. Procédé selon une des revendications précédentes, **caractérisé en ce qu'**au moins la demande et/ou au moins la réponse ne comportent pas de données comme contenu.

10. Procédé selon une des revendications précédentes, **caractérisé en ce que**, pour la sélection d'un protocole de communication, une propre liaison par câble est utilisée.

11. Procédé selon une des revendications précédentes, **caractérisé en ce que**, pour la sélection d'un protocole de communication, une liaison par câble est utilisée, laquelle fait partie d'au moins deux protocoles de communication.

12. Procédé selon une des revendications précédentes, **caractérisé en ce que**, pour la sélection d'un protocole de communication sur une liaison par câble un seul niveau logique HAUT ou BAS est utilisé.

13. Terminal conçu pour, en tant que premier participant à la communication, effectuer les étapes, correspondantes au premier participant à la communication, du procédé selon une des revendications de 1 à 12.

14. Support de données portable conçu pour, en tant que deuxième participant à la communication, effectuer les étapes, correspondantes au deuxième participant à la communication, du procédé selon une des revendications de 1 à 12.

15. Système consistant en au moins un terminal et au moins un support de données portable, conçu pour exécuter un procédé conformément aux revendications de 1 à 12.
